# EUROPEAN PATENT SPECIFICATION

(11) **EP 0 503 859 B1**
(45) Date of publication and mention of the grant of the patent: **21.01.1998**
(21) Application number: 92301944.2
(22) Date of filing: 06.03.1992
(51) Int. Cl.: G11B 20/18, G11B 20/10, G11B 20/12

(54) **Digital signal recording method and apparatus**
Methode und Apparat zur Aufzeichnung von digitalen Signalen
Appareil et méthode pour l'enregistrement de signaux digitaux

(30) Priority: 12.03.1991 JP 46873/91; 26.11.1991 JP 310464/91
(43) Date of publication of application: 16.09.1992
(73) Proprietor: MITSUBISHI DENKI KABUSHIKI KAISHA, Tokyo (JP)
(72) Inventor: Onishi, Ken, c/o Denshi Shohin Kaihatsu Kenkyusho, Nagaokakyo-Shi, Kyoto-Fu (JP); Hongo, Kimitoshi, c/o Kyoto Jigyosho, Nagaokakyo-Shi, Kyoto-Fu (JP); Ono, Yukari, Denshi Shohin Kaihatsu Kenkyusho, Nagaokakyo-Shi, Kyoto-Fu (JP); Sugiyama, Kazuhiro, Denshi Shohin Kaihatsu, 1 Babazusho Nagaokakyo-Shi, Kyoto-Fu (JP)
(74) Representative: Nicholls, Michael John

(56) References cited:
- EP-A- 0 137 855
- EP-A- 0 406 595
- US-A- 4 710 826

## Description

The present invention relates to a digital signal recording method and apparatus for recording a digital video signal and a digital audio signal on a recording medium after the addition of an error correcting code to these signals.

In the recording of a video signal and an audio signal on a tape for a video tape recorder (VTR) by means of a rotating magnetic head, there has been proposed the following digital signal recording method by the present inventors which has more reliable error correcting capability over burst errors in the traveling direction of a tape and also provides an efficient, available recording format for a tape without the increase of redundancy.

In the above-described method, an audio signal, conventionally recorded in part of all tracks, is recorded in n tracks selected from m tracks intended for recording the video signal for one field (the number m is an integral number not less than 3 while the number n is also an integral number not less than 2; however, m is bigger than n) and at least the audio signal of the odd number sample and the audio signal of the even sample are separately recorded on different tracks such that they are distributed in the width direction of a tape.

Therefore, by setting n audio sectors for one field, an audio sector length per sector is lengthened so that the data error correcting capability is improved. Besides, the n sectors are distributed in the width direction of a tape to record the audio signal of the odd number sample separately from the audio signal of the even number sample. Accordingly, half of the data may be saved even if a burst error in the traveling direction of a tape occurs because of the clogging of a magnetic head or other causes, the error correcting capability is improved, and the increase of redundancy in recording is avoided.

As one such example of the above-described method, the recording of a digital signal on a VTR tape in the case of 4-channels will be described.

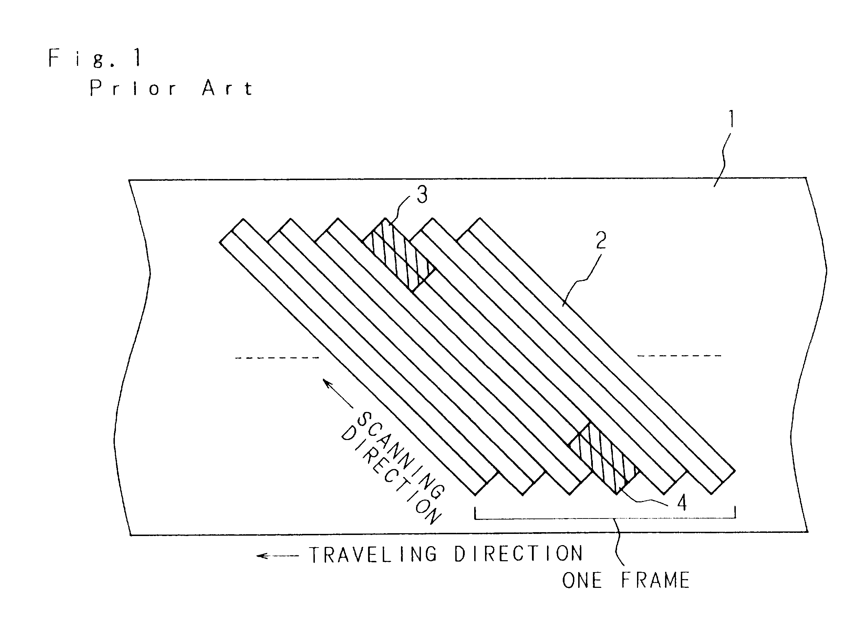

Fig. 1 of the accompanying drawings is a diagram depicting a recording format on a tape in a digital signal recording method. The reference numeral 1 denotes a tape for VTRs; the reference numeral 2, a video sector on which a video signal is recorded; the reference numeral 3, an audio sector positioned at the upper-end side of the tape on which an audio signal is recorded; and the reference numeral 4, another audio sector positioned at the lower-end side of the tape on which an audio signal is recorded. On the tape 1, a single segment is composed of two tracks. Signals are recorded at the same time on such two tracks in the same segment. And three segments constitute one field, and six segments (= twelve tracks) make up one frame.

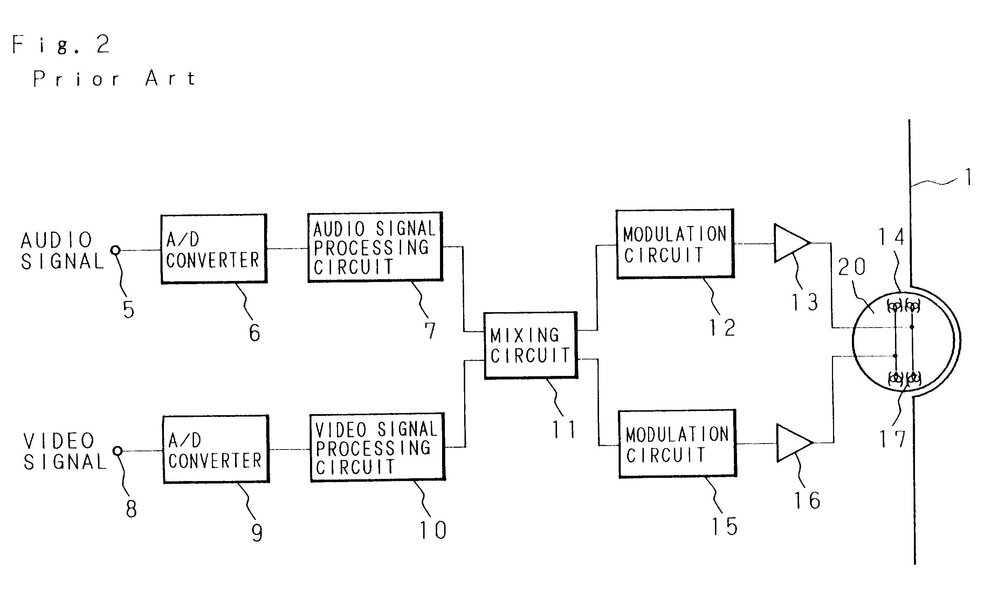

As an apparatus for recording a signal on the tape 1, one as shown in Fig. 2, for example, may be useful. During the recording of signals, the audio signal inputted from an audio signal input terminal 5 is converted by means of an A/D convertor 6 into the digital signal, placed under processing such as error correcting encoding in an audio signal processing circuit 7 and then fed into a mixing circuit 11. On the other hand, the video signal inputted from a video signal input terminal 8 is converted by means of an A/D converter 9 into the digital signal, placed under processing such as error correcting encoding in a video signal processing circuit 10 and then transmitted to the mixing circuit 11. In the mixing circuit 11, the video data is mixed with the audio data. The mixed data is modulated in a modulation circuit 12, amplified by means of a recording amplifier 13 and then recorded on one segment by means of a recording head 14 mounted on a rotating drum 20. The data mixed in the mixing circuit 11 is also modulated in a modulation circuit 15, amplified by means of a recording amplifier 16 and then recorded by means of a recording head 17 on the other segment adjacent to the first-mentioned segment. By alternately repeating this operation, the data are continuously recorded on the tape 1.

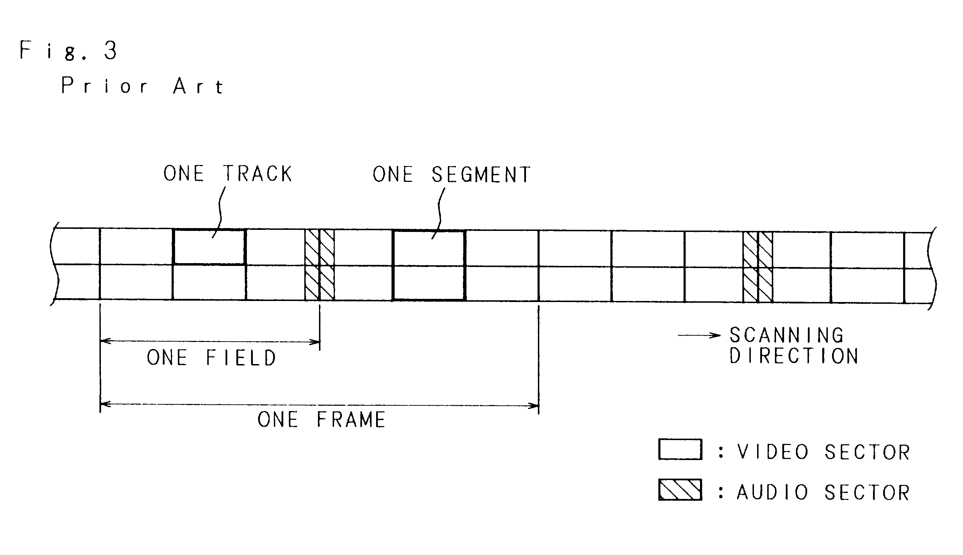

Fig. 3 is a diagram showing, as an example of the prior art, recording timing for recording a signal on the tape 1. An audio sector is disposed at the rearmost portion of one field and at the leading portion of the other field, both fields facing each other within one frame. The recording of an audio signal is performed across the boundary between these two fields. If the sampling frequency is 48 kHz and the field frequency of a video signal is 60 Hz, the number of audio signal samples to be recorded in a single field is: 48,000/60 = 800. Each field has only one audio sector, which means that 800 audio signal samples are recorded per channel in such an audio sector.

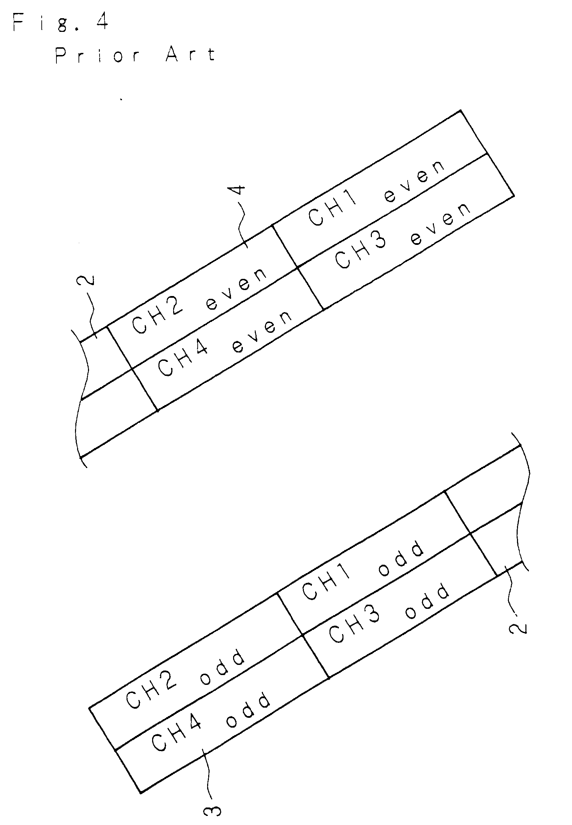

Fig. 4 is a diagram showing an allocation of recording channels in audio sectors. An audio sector is, in fact, halved by a gap and thus it is divided into four portions. As a result, audio signals of different channels are recorded in the corresponding four portions. In addition, the data given an odd ordinal number is recorded in the audio sector 3 locating at the upper-end side of the tape. The data given an even ordinal number is, on the other hand, recorded in the audio sector 4 locating at the lower-end side of the tape. With this arrangement, even in the case of either the data of the audio sector 3 or the data of the audio sector 4 being lost because of burst errors on the tape 1, at least half of these data may be saved and error correcting is possible. In the audio sector 3, the data of channels (hereinafter referred to as the "CH") 1 and 3 are recorded at the side of the video sector 2 while the data of CHs 2 and 4 are recorded at the side of the tape end. Conversely, in the audio sector 4, the data of CHs 2 and 4 are recorded at the side of the video sector 2 while the data of CHs 1 and 3 are recorded at the side of the tape end. By such a recording method, even in the case of the occurrence of a burst error at both ends of the tape 1, it is possible to save half of the data and to carry out error correcting as long as the width of such an error is not above a specified range.

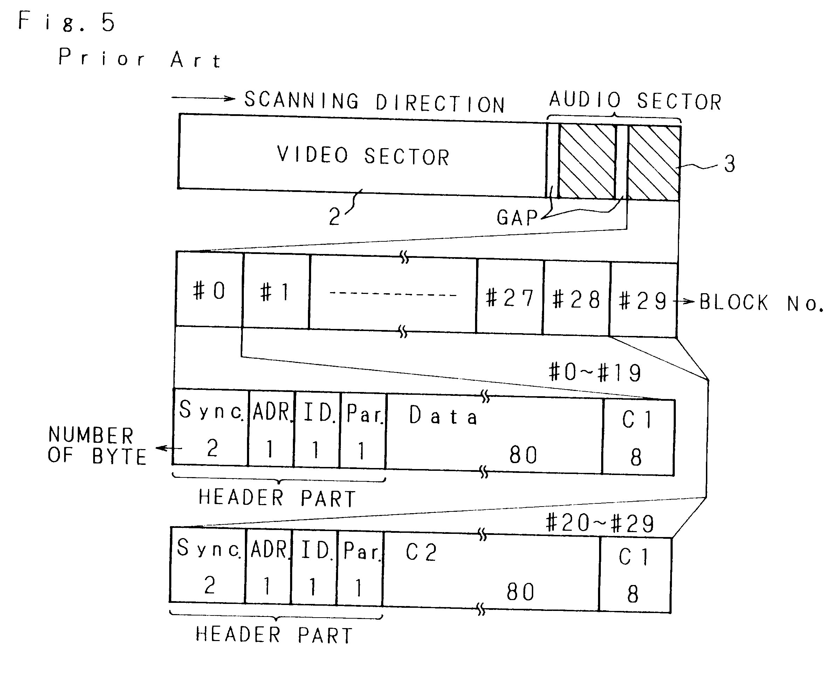

Fig. 5 is a diagram illustrating, as an example of the prior art, a data structure of an audio sector. Each audio sector, divided into two by a gap, is made up of thirty (30) data blocks each numbered from #0 through #29. And a synchronous signal (Sync.), a block address (ADR.), an identification signal (ID.), a parity (Par.), data, an inner code C1, and an outer code C2 are all recorded in a single data block, utilizing a format as shown in Fig. 5. Each portion of 80 bytes between the parity and the inner code C1 in the data blocks from #0 through #19 is used for recording data. And each portion of 80 bytes between the parity and the inner code C1 in the data blocks from #20 through #29 is used for recording the outer code C2.

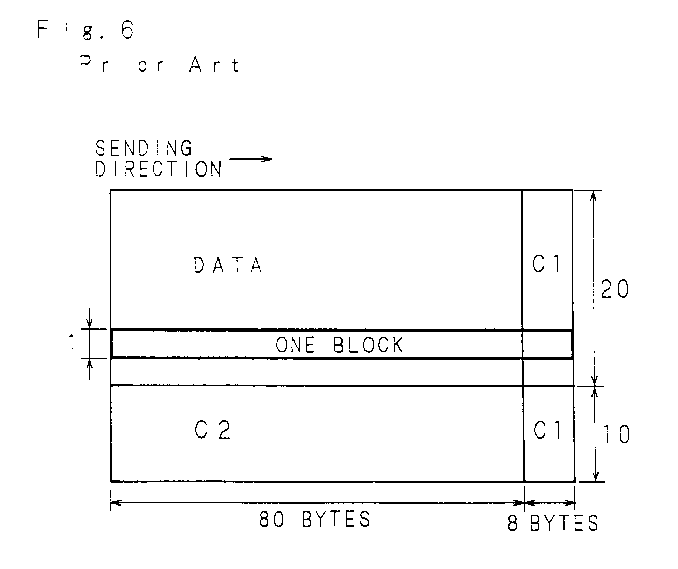

Fig. 6 is a diagram depicting, as an example of the prior art, an audio data structure in one field. A header portion is excluded in Fig. 6. An inner code C1 block is provided with an 8-byte check code for the data of 80 bytes so that errors up to three bytes may be corrected within the block. An outer code C2 block, on the other hand, is provided with a 10-byte check code for the data of 20 bytes so that each block has the correcting capability for errors up to four bytes with the help of an erasure flag from an inner code C1 decoder.

In the above-described example of the prior art, an audio sector is not provided on every video sector but only on selected video sectors, so that each audio sector length is lengthened and the error correcting capability is improved. Besides, these audio sectors are distributed in the width direction of a tape, and audio signals are divided into the groups of odd samples and even samples for separately recording them, so that a recording format with small redundancy and more reliable correcting capability over burst errors occurring in the traveling direction of the tape 1 is obtained.

In the conventional digital signal recording method, since a video sector and an audio sector are arranged separately, this causes the difference between the random error correcting capability for video signals and that for audio signals. Besides, with regard to burst errors, the error correcting capability for audio signals is low. In digital video tape recorders for home use, it is necessary to compress video signals down to about 10-20 Mbps and audio signals down to about 100-200 kbps per channel, at which time the compression rate of the audio signals is about 1/100 of that of the video signals, and it is not advantageous to separately provide sectors, which will lead to the increase of redundancy as well as the decrease of encoding efficiency.

Newer recording methods are discussed in the technical report from IT90-12 of the Institute of Electronic Information and Communication, entitled "Study of Code Structure for Home Digital VTR using Superimposed Code".

It is an object of the invention to provide a digital signal recording method and apparatus capable of substantially equaiizing the error correcting abilities for the video signal and the audio signal.

It is another object of the invention to provide a digital signal recording method and apparatus with small redundancy.

It is still another object of the invention to provide a digital signal recording method and apparatus in which there is no need to additionally increase the number of recording bits even when the number of channels of the audio signal varies.

In one digital signal recording method as defined in claim 1 and in one digital recording apparatus as defined in claim 2, an error correction code is added to the digital audio data and the digital video data, respectively. Then the digital audio data and the digital video data, both including the error correction code, are recorded in a superimposed relationship. The range of a recording region for superimposed data is variable, depending on the number of channels of digital audio signals.

The superimposed code makes the error correcting capabilities for the video signal and the audio signal almost equal. Unlike conventional methods, in the present invention it is not necessary to provide a certain region exclusively used for recording the audio signal only, and the redundancy in encoding is small. Audio signals of any number of channels may be recorded without changing the number of recording bits.

In another digital signal recording method as defined in claim 3 and in another digital recording apparatus as defined in claim 5, an error correction code is added to the digital audio data and the digital video data, respectively. Then the digital audio data and the digital video data, both including the error correction code, are recorded in such a manner that part of the digital video data is replaced by the digital audio data. The range of a recording region for replaced data is variable, depending on the number of channels of digital audio signals.

Since the digital audio data is recorded in the region where part of the digital video is to be recorded, the error correcting capability for the audio signal is almost equal to that for the video signal. Unlike conventional methods, in the present invention it is not necessary to provide a certain region exclusively used for recording the audio signal only, and the redundancy in encoding is small. Audio signals of any number of channels may be recorded without changing the number of recording bits.

The invention will be further described in the following detailed description given by way of example with reference to the accompanying drawings, in which:-

Fig. 1 a diagram depicting, as an example of the prior art, a recording format on a tape.

Fig. 2 is a block diagram showing a structure of a conventional digital video tape recorder.

Fig. 3 is a diagram depicting, as an example of the prior art, recording timing on a tape.

Fig. 4 is a diagram depicting, as an example of the prior art, an allocation of recording channels in an audio sector.

Fig. 5 is a diagram showing, as an example of the prior art, a data structure in an audio sector.

Fig. 6 is a diagram showing a conventional audio data structure of a single field.

Fig. 7 is a diagram depicting a recording format on a tape in accordance with the invention.

Fig. 8 is a diagram illustrating recording timing as well as a data structure of a tape of the invention.

Fig. 9 is a diagram showing a structure of error correction in relation to video and audio data in accordance with a first embodiment of the invention.

Fig. 10 is a block diagram showing a structure of a digital video tape recorder according to the invention.

Fig. 11 is a block diagram showing a structure of a high-efficiency encoder according to the invention.

Fig. 12 is a diagram showing another structure of error correction in relation to audio data in accordance with the invention.

Fig. 13 is a diagram showing a structure of error correction in relation to video and audio data in accordance with a second embodiment of the invention.

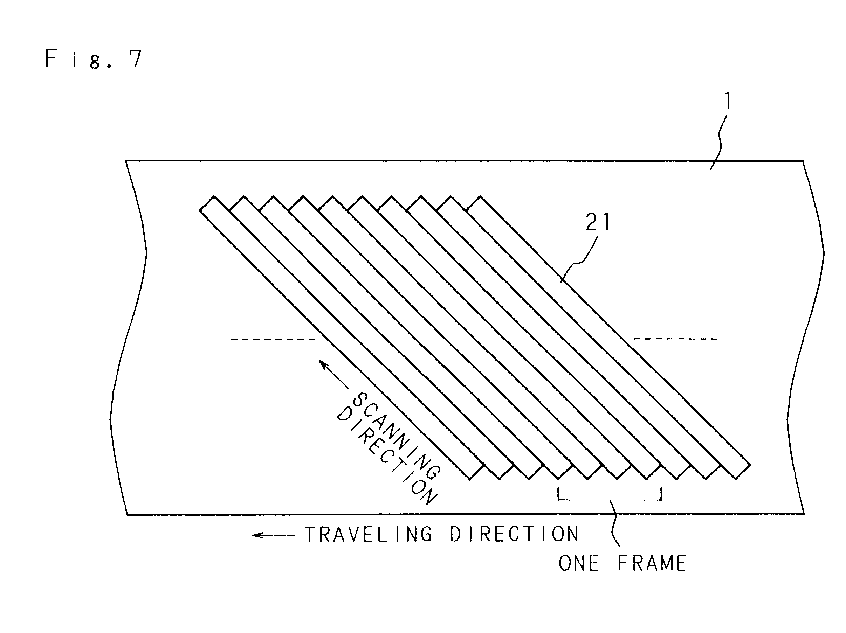

Fig. 7 is a diagram of a recording format on a tape in the digital signal recording method of the invention. In Fig. 7, the reference numeral 1 denotes a video tape for video tape recorders. The reference numeral 21 represents a track for recording audio and video signals. Herein, the width of the tape 1 is 6-8 mm, the pitch of the track is 5-10 µm, and the track recording density is about 60-100 kbpi. Taking a digital video tape recorder for home use into account, one frame is made up of about four tracks.

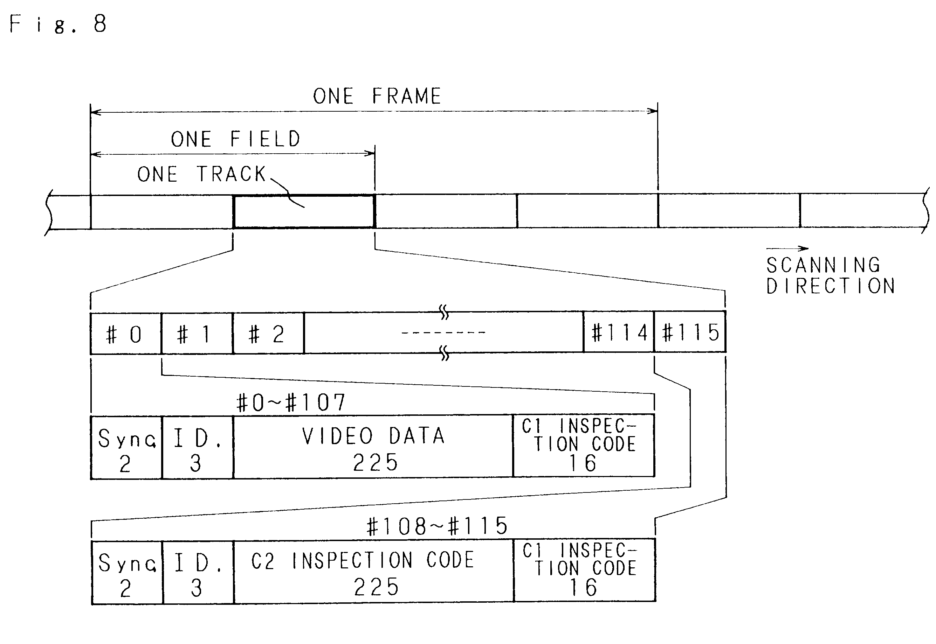

Fig. 8 illustrates recording timing on the tape 1 and a data structure of the invention. Formed within one field are two tracks, and one track is made up of 116 C1 blocks numbered from #0 through #115. A single C1 block is made up of 246 bytes altogether, including a synchronous signal (Sync.) of two bytes, an identification signal (ID.) of three bytes, data of 225 bytes, and a C1 inspection code of 16 bytes. The video data are recorded in the 225-byte date portion of each of the C1 blocks numbered from #0 through #107 while a C2 inspection code is recorded in the 225-byte data portion of each of the C1 blocks numbered from #108 through #115.

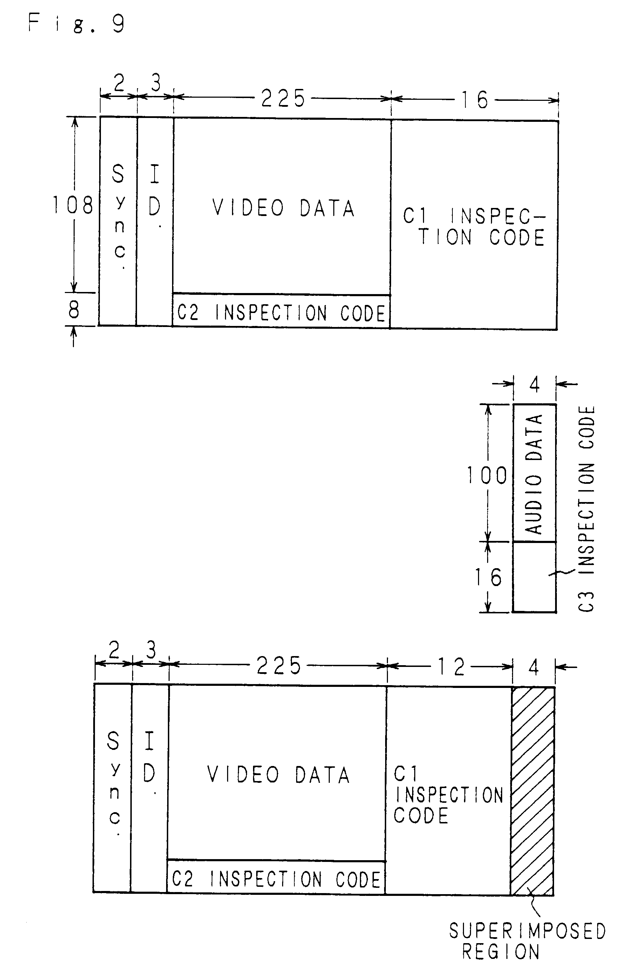

Fig. 9 is a diagram showing structures of video data, audio data, and error correction codes of the invention. The video data is made up a product code of a (241,225,17) Reed-Solomon code (hereinafter referred to as the "RS" code) as a C1 code and a (116,108,9) RS code as a C2 code. Herein, an (n, k, d) RS code is one on a Galois field GF (2⁸) and has a code length = n, an information length = k and a distance between codes = d. The audio data constitutes a (116,100,17) RS as a C3 code. Fig. 9 shows the case of an audio signal of 2-channels in which the data amount is 400 bytes per track. The C3 encoded audio data is mod.-2 added and are superimposed in a region where the C1 inspection code is recorded.

The rates of a video signal and an audio signal will be described. If, as a video signal, a (4 : 2: 2) component signal in accordance with Rec. 601 of CCIR is fed, the sampling frequency of the video signal is that a Y signal is 13.5 MHz and each of an R-Y signal and a B-Y signal is 6.75 MHz. Accordingly, if each signal is 8-bit quantized, the total data rate will be 216 Mbps. The video signal recording region is 225 × 108 =24,300 bytes per track, so that its data rate will be 23.328 Mbps. Compression of 216 Mbps down to 23.328 Mbps may be carried out by an orthogonal transform or the similar means.

If the sampling frequency of the audio signal is 48 kHz and the quantizing bit number is 16 bits, the data rate of a 2-channel audio signal is 2 × 48 × 16 = 1,536 kbps. On the other hand, the audio signal recording region is 400 bytes per track, so that its data rate will be 384 kbps. As a result, the audio signal is likewise compressed from 1,536 kbps down to 384 kbps.

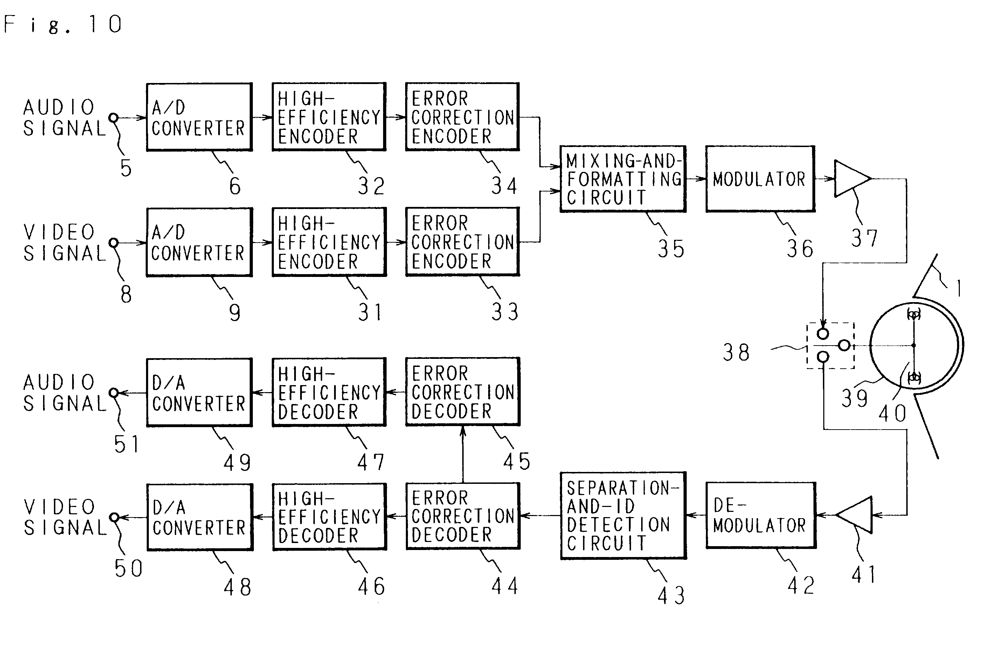

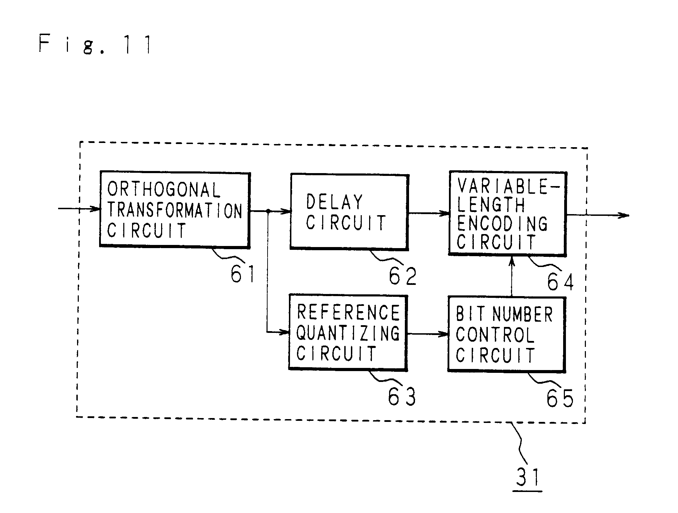

Next, a digital video tape recorder which realizes the above digital signal recording method will be described. Fig. 10 is a block diagram showing a structure of such a digital video tape recorder. In Fig. 10, the reference numeral 8 denotes a video signal input terminal. An analog video signal is converted by an A-D converter 9 into a digital signal and then is supplied to an high-efficiency encoder 31. The high-efficiency encoder 31 compresses the video signal at the above-mentioned compression rate (216 down to 23.328 Mbps). Fig. 11 is a block diagram showing an inner structure of the high-efficiency encoder 31. The high-efficiency encoder 31 comprises an orthogonal transformation circuit 61 which divides the video signal into, such as, blocks each of 8 by 8 pixels and obtains 64 coefficients by performing orthogonal transform such as discrete cosine transform (DCT); a delay circuit 62 which delays the coefficients and then transmits them to a variable-length encoding circuit 64; a reference quantizing circuit 63 which performs a reference quantization for the coefficients; a bit number control circuit 65 which calculates the total number of bits within a fixed block and sends a control signal to the variable-length encoding circuit 64 to keep the number of bits constant; and the aforesaid variable-length encoding circuit 64 which performs encoding in order to keep the required number of bits (i.e., rate) within 23.328 Mbps according to the control signal. The variable-length encoded video data is supplied to an error correction encoder 33 for error correction encoding.

In Fig. 10, the reference numeral 5 represents an audio signal input terminal. An A/D converter 6 converts an analog audio signal into a digital signal and feeds it to a high-efficiency encoder 32. The high-efficiency encoder 32 has the same inner structure as the high-efficiency encoder 31 and compresses the audio signal at the above-mentioned compression rate: 1,536 down to 384 kbps. The variable-length encoded audio data is fed to an error correction encoder 34 for error correction encoding. Both error correction encoded video data and audio data are supplied to a mixing-and-formatting circuit 35. The mixing-and-formatting circuit 35 mixes these data and prepares a recording format. A modulator 36 transforms such a recording format into a specific pattern to record it on the tape 1. This pattern is amplified by a recording amplifier 37 and is recorded on the tape 1 by means of a magnetic head 40 mounted on a rotating drum 39 when a selector 38 is switched to the recording side.

The reference numerals 41 through 51 denote components disposed at the side of a decoder. When the selector 38 is switched to the reproducing side, the data recorded on the tape 1 is reproduced by the magnetic head 40 and is amplified by a reproducing amplifier 41. Then, the data is fed to a demodulator 42. The demodulator 42 demodulates the data pattern recorded on the tape 1 into the original recording format, and the demodulated recording format is synchronously separated through a synchronous separation-and-ID detection circuit 43, thereafter being supplied to an error correction decoder 44. The error correction decoder 44 identifies the superimposed portion as an erasure and carries out, utilizing the C1 code, 4 erasures + 6 error correction to obtain the original video data. The error pattern of an erasure position thus obtained is recognized as C3 code + the recording-and-reproducing error, and is fed to an error correction decoder 45. The error correction decoder 45 performs C3-decoding to the error pattern of the erasure position so that the original audio data is obtained.

A high-efficiency decoder 46 performs, to the output from the error correction decoder 44, a variable-length decoding and a reverse orthogonal transform, obtains the original video signal of 8 by 8 pixels and feeds such a video signal to a D/A converter 48. The D/A converter 48 converts the video signal into analog form, thereafter the original video signal being fed out from an output terminal 50. On the other hand, a high-efficiency decoder 47 performs, to the output from the error correction decoder 45, the same processing as the high-efficiency decoder 46, obtains the original audio signal and feeds the data to a D/A converter 49. The D/A converter 49 converts the data into analog form, thereafter the original audio signal being fed out from an output terminal 51.

Next, the operation will be described. The video and audio signals, fed out from the input terminals 8 and 5, are individually digitalized by the A/D converters 9 and 6 and are compressed by the high-efficiency encoders 31 and 32 down to the determined rate described above. In the error correction encoder 33 the video data is first C2-encoded into the (116,108,9) RS code, thereafter being C1-encoded into the (241,225,17) RC code. On the other hand, in the error correction encoder 34 the audio data is C3-encoded into the (116,100,17) RS code. The error correction encoded data is superimposed in the mixing-and-formatting circuit 35, is formatted as shown in Fig. 8 and is transmitted to the modulator 36. The data which is digital-modulated by the modulator 36 is passed through the recording amplifier 37 and the selector 38 and is recorded on the tape 1 by way of the magnetic head 40.

When reproducing the data, the recorded data is reproduced by the magnetic head 40 out of the tape 1 and is passed through the selector 38, the reproducing amplifier 41 and the demodulator 42. As a result, the digital signal with the original format is reproduced. The original recording format is synchronously separated in the synchronous separation-and-ID detection circuit 43 and is fed to the error correction decoder 44. The error correction decoder 44 identifies the superimposed portion as an erasure and carries out, using the C1 code, 4 erasures + 6 error correction. The error pattern of an erasure position thus obtained is recognized as the C3 code data + the recording-and-reproducing error. In the error correction decoder 45 the error pattern of the erasure position is C-3 encoded, and the original audio data is obtained. In the event that correction, using the C1 code, has not been possible, a codeword in question is flagged and, using the C2 code, is performed a correction job similar to one in the case that there is no superimposition. In this manner, the original video data is obtained. In the case that error correction is impossible, error detection is carried out and then a flag together with the data is sent. In the high-efficiency decoder 46, the video data, delivered from the error correction decoder 44, is performed variable-length decoding and reverse orthogonal transform, and decoded into the original video signal of 8 by 8 pixels, thereafter being converted into the analog signal by means of the D/A converter 48. And the original video signal is fed out from the output terminal 50. If any error is detected at this phase, interpolation (such as permutation by using data recorded in a field before another) is carried out. The audio data from the error correction decoder 45 is likewise processed in the high-efficiency decoder 47 and the D/A converter 49, and the original audio signal is fed out from the output terminal 51.

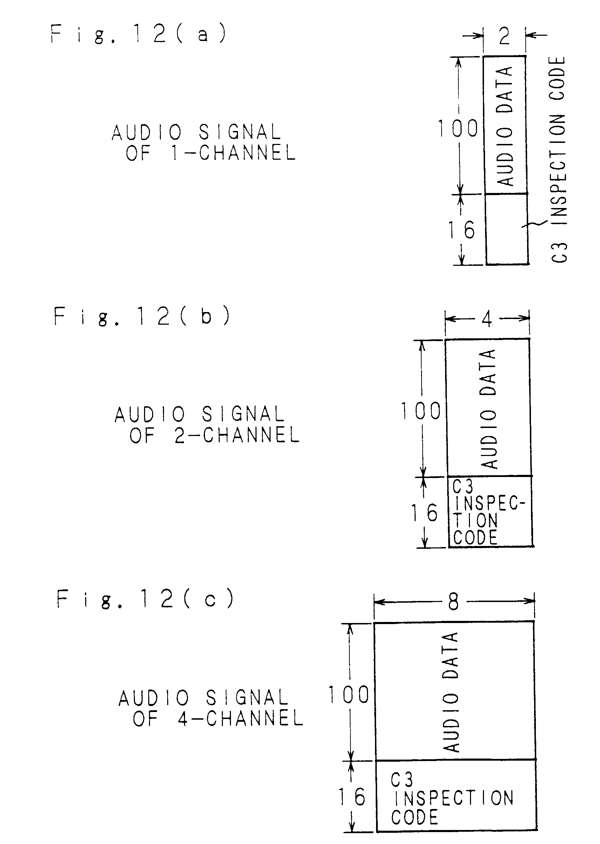

The above-described embodiment has been described about the audio signal of 2-channels. In the case of the audio signal of a single channel, as shown in Fig. 12(a), the audio signal is performed high-efficiency encoding in a region of 2 × 100 = 200 bytes per track for performing the C3 error correction encoding. Further, with the audio signal of 4-channels, as shown in Fig. 12(c), the audio signal is performed high-efficiency encoding in a region of 8 × 100 = 800 bytes per track for performing the C3 error correction encoding. As described, the superimposed region varies, depending upon the number of audio signal channels. In this case, a signal capable of identifying the number of channels may be recorded in the identification signal (ID.) recording region. By detecting the number of channels in a superimposed region from the identification signal, the number of audio signal channels becomes clear and it is possible to control the error correction method.

As explained in the technical report IT90-12 of the Institute of Electronic Information and Communication entitled "Study Of Code Structure For Home Digital VTR Using Superimposed Code" by Yoshida et al, it is possible to make the correcting capabilities for the video and audio signals almost equal. Besides, it is also possible to control the error correcting capabilities for the video and audio signals by changing a structure of the C3 code.

Next, another embodiment of the invention will be described. In the above-mentioned embodiment, the audio sector is superimposed on the video sector. On the other hand, in this embodiment part of the video sector is replaced by the audio sector.

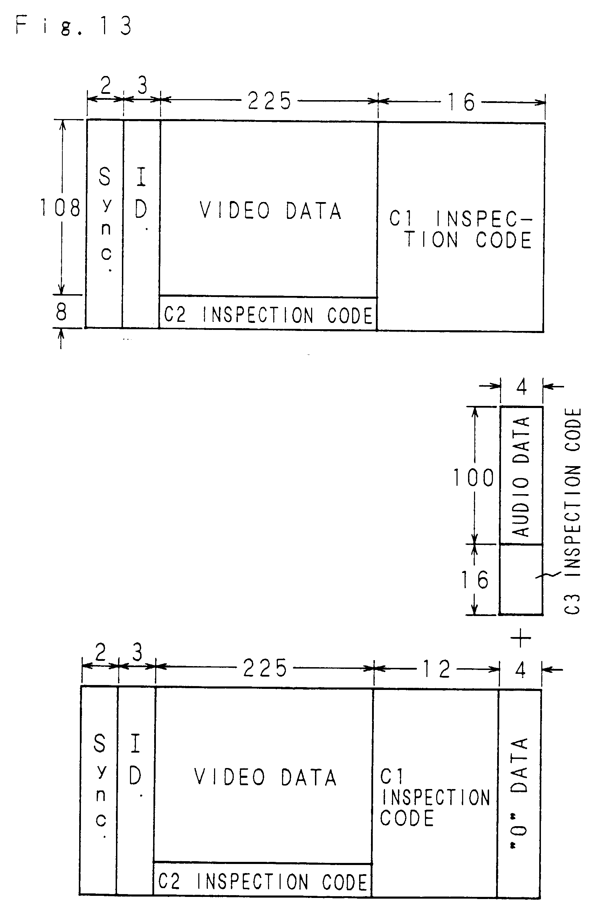

Fig. 13 is a diagram showing structures of video data, audio data, and error correction codes. The video data is made up a product code of a (241,225,17) RS code as a C1 code and a (116,108,9) RS code as a C2 code. The audio data constitutes a (116,100,17) RS as a C3 code. Fig. 13 shows the case of an audio signal of 2-channels in which the data amount is 400 bytes per track. The C3 encoded audio data is recorded in a region where part of C1 code is deleted. That is, it is mod.-2 added on condition that part of C1 code remains "0" data.

In this embodiment, as explained in the technical report IT90-12 of the Institute of Electronic Information and Communication entitled "Study Of Code Structure For Home Digital VTR Using Superimposed Code" by Yoshida et al, it is possible to make the correcting capabilities for the video and audio signals almost equal. Principal operations of this embodiment are the same as those of the above-mentioned embodiment, and the description thereof is omitted.

As described above, according to the invention, the digital video signal and the digital audio signal are performed error correction encoding, respectively. And the audio data with the error correction code is superimposed on the video data with the error correction code for recording. Or part of the video data with the error correction code is replaced by the audio data with the error correction code for recording. As a result, the correcting capabilities for the video and audio signals will become almost equal. Further, a digital signal recording method with small redundancy may be achieved.

Also, in the invention, since the region where the audio data with the error correction code is superimposed on the video data with the error correction code or the region where part of the video data with the error correction code is replaced by the audio data with the error correction code is made variable according to the number of audio signal channels, there is no need to additionally increase the number of recording bits even if the number of audio signal channels varies.

The present embodiment is illustrative and not restrictive, since the scope of the invention is defined by the appended claims rather than by the description preceding them.

## Claims

1. A digital signal recording method for recording a digital video signal and a digital audio signal on a recording medium, comprising the steps of:
encoding the digital video signal to obtain encoded video data;
encoding the digital audio signal to obtain encoded audio data;
obtaining a video data error correction code for correcting an error caused by encoding the digital video signal;
obtaining an audio data error correction code for correcting an error caused by encoding the digital audio signal;
adding the video data error correction code to the encoded video data to obtain video data with correction code and recording the video data with correction code on the recording medium; and
adding the audio data error correction code to the encoded audio data to obtain audio data with correction code and recording the audio data with correction code on the recording medium by superimposing it on the video data with correction code; wherein
the recording region where the audio data with correction code is recorded with a superimposing relation to the video data with correction code is variable, depending on the number of channels of the digital audio signal.

2. A digital signal recording apparatus for inputting an analog video signal and an analog audio signal and recording video data and audio data on a recording medium, comprising:
means (9) for converting the analog video signal into a digital video signal;
means (6) for converting the analog audio signal into a digital audio signal;
first encoding means (31) for encoding the digital video signal to obtain encoded video data;
second encoding means (32) for encoding the digital audio signal to obtain encoded audio data;
means (33) for obtaining a video data error correction code for correcting an error caused by encoding the digital video signal, and adding the video data error correction code to the encoded video data to obtain video data with correction code;
means (34) for obtaining an audio data error correction code for correcting an error caused by encoding the digital audio signal, and adding the audio data error correction code to the encoded audio data to obtain audio data with correction code; and
means (35-40) for recording the video data with correction code on the recording medium, and recording the audio data with correction code on the recording medium by superimposing it on the video data with correction code; wherein
the recording region where the audio data with correction code is recorded with a superimposing relation to the video data with correction code is variable, depending on the number of channels of the digital audio signal.

3. A digital signal recording method for recording a digital video signal and a digital audio signal on a recording medium, comprising the steps of:
encoding the digital video signal to obtain encoded video data;
encoding the digital audio signal to obtain encoded audio data;
obtaining a video data error correction code for correcting an error caused by encoding the digital video signal;
obtaining an audio data error correction code for correcting an error caused by encoding the digital audio signal;
adding the video data error correction code to the encoded video data to obtain video data with correction code and recording the video data with correction code on the recording medium; and
adding the audio data error correction code to the encoded audio data to obtain audio data with correction code and recording the audio data with correction code on the recording medium by replacing part of the video data with correction code with the audio data with correction code; wherein
the recording region where the audio data with correction code is recorded with a replacing relation to part of the video data with correction code is variable, depending on the number of channels of the digital audio signal.

4. A digital signal recording method as defined in claim 1 or 3, wherein data rate is compressed by using an orthogonal transform when the digital video signal and the digital audio signal are encoded.

5. A digital signal recording apparatus for inputting an analog video signal and an analog audio signal and recording video data and audio data on a recording medium, comprising:
means (9) for converting the analog video signal into a digital video signal;
means (6) for converting the analog audio signal into a digital audio signal;
first encoding means (31) for encoding the digital video signal to obtain encoded video data;
second encoding means (32) for encoding the digital audio signal to obtain encoded audio data;
means (33) for obtaining a video data error correction code for correcting an error caused by encoding the digital video signal, and adding the video data error correction code to the encoded video data to obtain video data with correction code;
means (34) for obtaining an audio data error correction code for correcting an error caused by encoding the digital audio signal, and adding the audio data error correction code to the encoded audio data to obtain audio data with correction code; and
means (35,40) for recording the video data with correction code on the recording medium, and recording the audio data with correction code on the recording medium by replacing part of the video data with correction code with the audio data with correction code; wherein
the recording region where the audio data with correction code is recorded with a replacing relation to part of the video data with correction code is variable, depending on the number of channels of the digital audio signal.

6. A digital signal recording apparatus as defined in claim 2 or 5, wherein said first encoding means (31) comprises an orthogonal transformation circuit (61) for dividing the digital video signal into blocks each having a plurality of pixels and performing an orthogonal transform on each block to obtain coefficients, a quantizing circuit (63) for quantizing the coefficients and a variable-length encoding circuit (64) for variable-length encoding an output of the quantizing circuit, and said second encoding means (32) comprises an orthogonal transformation circuit for dividing the digital audio signal into blocks each having a plurality of pixels and performing an orthogonal transform on each block to obtain coefficients, a quantizing circuit for quantizing the coefficients and a variable-length encoding circuit for variable-length encoding an output of the quantizing circuit.

## Patentansprüche

1. Aufzeichnungsverfahren für digitale Signale zur Aufzeichnung eines digitalen Videosignals und eines digitalen Audiosignals auf einem Aufzeichnungsmedium, das die folgenden Schritte umfaßt:
Kodierung des digitalen Videosignals, um kodierte Videodaten zu erhalten;
Kodierung des digitalen Audiosignals, um kodierte Audiodaten zu erhalten;
Erhalten eines Fehlerkorrekturcodes für Videodaten zur Korrektur eines Fehlers, der durch die Kodierung des digitales Videosignale verursacht wurde;
Erhalt eines Fehlerkorrekturcodes für Audiodaten zur Korrektur eines Fehlers, der durch die Kodierung des digitalen Audiosignales verursacht wurde;
Hinzufügen des Fehlerkorrekturcodes für Videodaten zu den kodierten Videodaten, um Videodaten mit Korrekturcode zu erhalten und Aufzeichnung der Videodaten mit Korrekturcode auf dem Aufzeichnungsmedium; und
Hinzufügen des Fehlerkorrekturcodes für Audiodaten zu den kodierten Audiodaten, um Audiodaten mit Korrekturcode zu erhalten und Aufzeichnung der Audiodaten mit Korrekturcode auf dem Aufzeichnungsmedium durch Überlagerung dieser über die Videodaten mit Korrekturcode; wobei
der Aufzeichnungsbereich, wo die Audiodaten mit Korrekturcode aufgezeichnet werden mit einer Überlagerungsbeziehung zu den Videodaten mit Korrekturcode, variabel ist in Abhängigkeit von der Zahl der Kanäle des digitalen Audiosignals.

2. Aufzeichnungsvorrichtung für digitale Signale zur Eingabe eines analogen Videosignals und eines analogen Audiosignals und Aufzeichnung von Videodaten und Audiodaten auf ein Aufzeichnungsmedium, die umfaßt:
eine Vorrichtung (9) zur Umwandlung des analogen Videosignals in ein digitales Videosignal;
eine Vorrichtung (6) zur Umwandlung des analogen Audiosignals in ein digitales Audiosignal;
eine erste Kodierungsvorrichtung (31) zur Kodierung des digitalen Videosignals, um kodierte Videodaten zu erhalten;
eine zweite Kodierungsvorrichtung (32) zur Kodierung des digitalen Audiosignals, um kodierte Audiodaten zu erhalten;
eine Vorrichtung (33), zum Erhalt eines Fehlerkorrekturcodes für Videodaten zur Korrektur eines Fehlers, der durch die Kodierung des digitalen Videosignals verursacht wird, und zum Hinzufügen des Fehlerkorrekturcodes für Videodaten zu den kodierten Videodaten, um Videodaten mit Korrekturcode zu erhalten;
eine Vorrichtung (34), zum Erhalt eines Fehlerkorrekturcode für Audiodaten zur Korrektur eines Fehlers, der durch die Kodierung des digitalen Audiosignals verursacht wird, und zum Hinzufügen des Fehlerkorrekturcodes für Audiodaten zu den kodierten Audiodaten, um Audiodaten mit Korrekturcode zu erhalten; und
eine Vorrichtung (35 bis 40) zur Aufzeichnung der Videodaten mit Korrekturcode auf dem Aufzeichnungsmedium und zum Aufzeichnen der Audiodaten mit Korrekturcode auf dem Aufzeichnungsmedium durch Überlagerung dieser über die Videodaten mit Korrekturcode; wobei
der Aufzeichnungsbereich, wo die Audiodaten mit Korrekturcode unter einer Überlagerungsbeziehung zu den Videodaten mit Korrekturcode aufgezeichnet werden, variabel ist in Abhängigkeit von der Zahl der Kanäle des digitalen Audiosignals.

3. Aufzeichnungsverfahren für digitale Signale zur Aufzeichnung eines digitalen Videosignals und eines digitalen Audiosignals auf einem Aufzeichnungsmedium, das die folgenden Schritte umfaßt:
Kodierung der digitalen Videosignale, um kodierte Videodaten zu erhalten;
Kodierung der digitalen Audiosignale, um kodierte Audiodaten zu erhalten;
Erhalten eines Fehlerkorrekturcodes für Videodaten zur Korrektur eines Fehlers, der durch die Kodierung des digitalen Videosignals verursacht wird;
Erhalten eines Fehlerkorrekturcodes für Audiodaten zur Korrektur eines Fehlers, der durch die Kodierung des digitalen Audiosignals verursacht wird;
Hinzufügen des Fehlerkorrekturcodes für Videodaten zu den kodierten Videodaten, um Videodaten mit Korrekturcode zu erhalten und Aufzeichnung der Videodaten mit Korrekturcode auf dem Aufzeichnungsmedium; und
Hinzufügen des Fehlerkorrekturcodes für Audiodaten zu den kodierten Audiodaten, um Audiodaten mit Korrekturcode zu erhalten und Aufzeichnung der Audiodaten mit Korrekturcode auf dem Aufzeichnungsmedium durch Ersetzen eines Teils der Videodaten mit Korrekturcode durch die Audiodaten mit Korrekturcode; wobei
der Aufzeichnungsbereich, wo die Audiodaten mit Korrekturcode unter einer Ersetzungsbeziehung zu einem Teil der Videodaten mit Korrekturcode aufgezeichnet werden, variabel ist in Abhängigkeit von der Zahl der Kanäle des digitalen Audiosignals.

4. Aufzeichnungsverfahren für digitale Signale gemäß den Ansprüchen 1 oder 3, wobei die Datenrate komprimiert wird durch Verwendung einer orthogonalen Transformation, wenn die digitalen Videosignale und die digitalen Audiosignale kodiert werden.

5. Aufzeichnungsvorrichtung für digitale Signale zur Eingabe eines analogen Videosignals und eines analogen Audiosignals und Aufzeichnung von Videodaten und Audiodaten auf einem Aufzeichnungsmedium, die umfaßt:
eine Vorrichtung (9) zur Umwandlung des analogen Videosignals in ein digitales Videosignal;
eine Vorrichtung (6) zur Umwandlung des analogen Audiosignals in ein digitales Audiosignal;
eine erste Kodierungsvorrichtung (31) zur Kodierung des digitalen Videosignals, um kodierte Videodaten zu erhalten;
eine zweite Kodierungsvorrichtung (32) zur Kodierung des digitalen Audiosignals, um kodierte Audiodaten zu erhalten;
eine Vorrichtung (33), zum Erhalt eines Fehlerkorrekturcodes für Videodaten zur Korrektur eines Fehlers, der durch die Kodierung des digitalen Videosignals verursacht wird, und zum Hinzufügen des Fehlerkorrekturcodes für Videodaten zu den kodierten Videodaten, um Videodaten mit Korrekturcode zu erhalten;
eine Vorrichtung (34), zum eines Fehlerkorrekturcodes für Audiodaten zur Korrektur eines Fehlers, der durch die Kodierung der digitalen Audiodaten verursacht wird, und zum Hinzufügen des Fehlerkorrekturcodes für Audiodaten zu den kodierten Audiodaten, um Audiodaten mit Korrekturcode zu erhalten; und
eine Vorrichtung (35, 40) zur Aufzeichnung der Videodaten mit Korrekturcode auf dem Aufzeichnungsmedium und zum Aufzeichnen der Audiodaten mit Korrekturcode auf dem Aufzeichnungsmedium durch Ersetzen eines Teils der Videodaten mit Korrekturcode durch die Audiodaten mit Korrekturcode; wobei
der Aufzeichnungsbereich, wo die Audiodaten mit Korrekturcode unter einer Ersetzungsbeziehung zu einem Teil der Videodaten mit Korrekturcode aufgezeichnet werden, variabel ist in Abhängigkeit von der Zahl der Kanäle des digitalen Audiosignals.

6. Aufzeichnungsvorrichtung für digitale Signale nach Anspruch 2 oder 5,
wobei die genannte erste Kodierungsvorrichtung (31) umfaßt:
einen Schaltkreis (61) für orthogonale Transformation zur Aufteilung des digitalen Videosignals in Blöcke, die jeweils eine Vielzahl von Pixeln aufweisen, und zur Durchführung einer orthogonalen Transformation auf jedem Block, um Koeffizienten zu erhalten,
einen Quantisierungsschaltkreis (63) zur Quantisierung der Koeffizienten und
einen Variable-Länge-kodierenden Schaltkreis (64) zur Kodierung mit variabler Länge einer Ausgabe des Quantisierungsschaltkreises, und
wobei die genannte zweite Kodierungsvorrichtung (32) umfaßt:
einen Schaltkreis für orthogonale Transformation zur Aufteilung des digitalen Audiosignals in Blöcke, wobei jeder Block eine Vielzahl von Pixeln aufweist, und zur Durchführung einer orthogonalen Transformation auf jedem Block, um Koeffizienten zu erhalten,
einen Quantisierungsschaltkreis zur Quantisierung der Koeffizienten und
einen Variable-Länge-kodierenden Schaltkreis zur Kodierung mit einer variabler Länge einer Ausgabe des Quantisierungsschaltkreises.

## Revendications

1. Procédé d'enregistrement de signaux numériques pour enregistrer un signal vidéo numérique et un signal audio numérique sur un support d'enregistrement, comprenant les étapes consistant à:
coder le signal vidéo numérique afin d'obtenir des données vidéo codées;
coder le signal audio numérique afin d'obtenir des données audio codées;
obtenir un code de correction d'erreur des données vidéo afin de corriger une erreur occasionnée par le codage du signal vidéo numérique;
obtenir un code de correction d'erreur des données audio afin de corriger une erreur occasionnée par le codage du signal audio numérique;
ajouter le code de correction d'erreur des données vidéo aux données vidéo codées afin d'obtenir des données vidéo à code de correction et enregistrer les données vidéo à code de correction sur le support d'enregistrement; et
ajouter le code de correction d'erreur des données audio aux données audio codées afin d'obtenir des données audio à code de correction et enregistrer les données audio à code de correction sur le support d'enregistrement en les superposant aux données vidéo à code de correction; dans lequel
la région d'enregistrement où les données audio à code de correction sont enregistrées en relation de superposition avec les données vidéo à code de correction est variable, en fonction du nombre de canaux du signal audio numérique.

2. Dispositif d'enregistrement de signaux numériques pour introduire un signal vidéo analogique et un signal audio analogique et des données vidéo et des données audio d'enregistrement sur un support d'enregistrement, comprenant:
des moyens (9) pour convertir le signal vidéo analogique en un signal vidéo numérique;
des moyens (6) pour convertir le signal audio analogique en un signal audio numérique;
des premiers moyens de codage (31) pour coder le signal vidéo numérique afin d'obtenir des données vidéo codées;
des deuxièmes moyens de codage (32) pour coder le signal audio numérique afin d'obtenir des données audio codées;
des moyens (33) pour obtenir un code de correction d'erreur des données vidéo afin de corriger une erreur occasionnée par le codage du signal vidéo numérique, et pour ajouter le code de correction d'erreur des données vidéo aux données vidéo codées afin d'obtenir des données vidéo à code de correction;
des moyens (34) pour obtenir un code de correction d'erreur des données audio afin de corriger une erreur occasionnée par le codage du signal audio numérique, et pour ajouter le code de correction d'erreur des données audio aux données audio codées afin d'obtenir des données audio à code de correction; et
des moyens (35 à 40) pour enregistrer les données vidéo à code de correction sur le support d'enregistrement, et pour enregistrer les données audio à code de correction sur le support d'enregistrement en les superposant aux données vidéo à code de correction;
dans lequel
la région d'enregistrement où les données audio à code de correction sont enregistrées en relation de superposition avec les données vidéo à code de correction est variable, en fonction du nombre de canaux du signal audio numérique.

3. Procédé d'enregistrement de signaux numériques pour enregistrer un signal vidéo numérique et un signal audio numérique sur un support d'enregistrement, comprenant les étapes consistant à :
coder le signal vidéo numérique afin d'obtenir des données vidéo codées;
coder le signal audio numérique afin d'obtenir des données audio codées;
obtenir un code de correction d'erreur des données vidéo pour corriger une erreur occasionnée par le codage du signal vidéo numérique;
obtenir un code de correction d'erreur des données audio pour corriger une erreur occasionnée par le codage du signal audio numérique;
ajouter le code de correction d'erreur des données vidéo aux données vidéo codées afin d'obtenir des données vidéo à code de correction et enregistrer les données vidéo à code de correction sur le support d'enregistrement; et
ajouter le code de correction d'erreur des données audio aux données audio codées afin d'obtenir des données audio à code de correction et enregistrer les données audio à code de correction sur le support d'enregistrement en remplaçant une partie des données vidéo à code de correction par les données audio à code de correction; dans lequel
la région d'enregistrement où les données audio à code de correction sont enregistrées en relation de remplacement d'une partie des données vidéo à code de correction est variable, en fonction du nombre de canaux du signal audio numérique.

4. Procédé d'enregistrement de signaux numériques selon la revendication 1 ou la revendication 3, dans lequel le débit des données est comprimé en utilisant une transformée orthogonale lorsque le signal vidéo numérique et le signal audio numérique sont codés.

5. Dispositif d'enregistrement de signaux numériques pour entrer un signal vidéo analogique et un signal audio analogique et pour enregistrer des données vidéo et des données audio sur un support d'enregistrement, comprenant:
des moyens (9) pour convertir le signal vidéo analogique en un signal vidéo numérique;
des moyens (6) pour convertir le signal audio analogique en un signal audio numérique;
des premiers moyens de codage (31) pour coder le signal vidéo numérique afin d'obtenir des données vidéo codées;
des deuxièmes moyens de codage (32) pour coder le signal audio numérique afin d'obtenir des données audio codées;
des moyens (33) pour obtenir un code de correction d'erreur des données vidéo afin de corriger une erreur occasionnée par le codage du signal vidéo numérique, et pour ajouter le code de correction d'erreur des données vidéo aux données vidéo codées afin d'obtenir des données vidéo à code de correction;
des moyens (34) pour obtenir un code de correction d'erreur des données audio afin de corriger une erreur occasionnée par le codage du signal audio numérique, et pour ajouter le code de correction d'erreur des données audio aux données audio codées afin d'obtenir des données audio à code de correction; et
des moyens (35, 40) pour enregistrer les données vidéo à code de correction sur le support d'enregistrement, et pour enregistrer les données audio à code de correction sur le support d'enregistrement en remplaçant une partie des données vidéo à code de correction par les données audio à code de correction; dans lequel
la région d'enregistrement où les données audio à code de correction sont enregistrées en relation de remplacement d'une partie des données vidéo à code de correction est variable, en fonction du nombre de canaux du signal audio numérique.

6. Dispositif d'enregistrement de signaux numériques selon la revendication 2 ou la revendication 5, dans lequel lesdits premiers moyens de codage (31) comprennent un circuit de transformation orthogonale (61) destiné à diviser le signal vidéo numérique en blocs ayant chacun une pluralité de pixels et réalisant une transformée orthogonale sur chaque bloc afin d'obtenir des coefficients, un circuit de quantification (63) destiné à quantifier les coefficients et un circuit de codage à longueur variable (64) destiné au codage à longueur variable d'une sortie du circuit de quantification, et lesdits deuxièmes moyens de codage (32) comprennent un circuit de transformation orthogonale divisant le signal audio numérique en blocs ayant chacun une pluralité de pixels et effectuant une transformée orthogonale sur chaque bloc afin d'obtenir des coefficients, un circuit de quantification pour quantifier les coefficients et un circuit de codage à longueur variable pour le codage à longueur variable d'une sortie du circuit de quantification.
